# EUROPEAN PATENT SPECIFICATION

(11) **EP 2 517 924 B1**
(45) Date of publication and mention of the grant of the patent: **30.08.2017**
(21) Application number: 12165661.5
(22) Date of filing: 26.04.2012
(51) Int. Cl.: B62D 25/20, B60N 3/04, B60N 2/28

(54) **Vehicle rear structure**
Fahrzeug-Rückstruktur
Structure arrière de véhicule

(30) Priority: 28.04.2011 JP 2011100360
(43) Date of publication of application: 31.10.2012
(73) Proprietor: SUZUKI MOTOR CORPORATION, Hamamatsu-shi Shizuoka 432-8611 (JP)
(72) Inventor: Okura, Kouhei, Hamamatsu-shi, Shizuoka 432-8611 (JP)
(74) Representative: Horn Kleimann Waitzhofer Patentanwälte PartG mbB

(56) References cited:
- JP-A- 2004 268 668
- JP-A- 2009 280 146
- JP-A- 2011 051 475
- US-B1- 6 634 710

## Description

### FIELD OF THE INVENTION

The present invention relates to a vehicle rear structure including a child seat attachment member installed on a floor panel near a back side of a rear seat, and a carpet covering the child seat attachment member.

### BACKGROUND OF THE INVENTION

According to the recently amended Japanese Road Traffic Act, use of a child seat is now mandatory when children under six years ride in a car. A child seat is a device for restraining the child's body in a seat (rear seat). Many cases have been recently reported of accidents, in which a child sitting in a child seat has remained unharmed, even though an adult wearing a seat belt has suffered severe injuries.

As a conventional method for fixing a child seat to a rear seat, it is common to fix the child seat using a seat belt. However, with this method, there is the risk that the child seat does not properly function to protect passengers if the child seat is attached incorrectly. To address this problem, a child seat fixing method under the international standard ISO-FIX has been recently instituted by the International Organization for Standardization (ISO). With the ISO-FIX method, a connector (engagement member) on the child seat side is inserted into a special insertion port or a gap between the seat back and the seat cushion of the rear seat, interlocking with a bar (anchor) on the vehicle side to fix the child seat. With ISO-FIX, the child seat can be easily and reliably fixed on the rear seat, making it safe.

For example, Patent Document 1 discloses a reclinable rear seat back structure, in which a fixing member for adaptation to the ISO-FIX system for fixing to a child seat and a fixing member for adaptation to the top-tether anchor ledge system are fastened to a very strong supporting member that is fixed to the rear floor. With Patent Document 1, the child seat can be fixed by either one of the ISO-FIX system and the top-tether anchor ledge system (a system in which a tether belt of the child seat is fixed).

The fixing member of Patent Document 1 is attached to the rear floor near the back side of the rear seat. Ordinarily, in station wagons and similar car types, a trunk room continuing from the passenger compartment extends behind the rear seat. A carpet (rear floor carpet) is spread on the rear floor of the trunk room. The rear floor is often somewhat elevated from the floor of the passenger compartment, and the rear floor carpet has the tendency to droop and sink in near the back side of the rear seat. To address this issue, Patent Document 2 provides a vehicle structure in which this sinking in is suppressed.

In the vehicle structure of Patent Document 2, a seat fixing member for fixing a child seat is described, which appears to be of the ISO-FIX type, even though this is not explicitly stated. In Patent Document 2, the front edge of the rear floor carpet is connected to the backrest (seat back) of the rear seat. Moreover, separate from the seat fixing member, an abutting piece is provided at an inner region at the lower end of the seat back. When the seat back is reclined forward, this abutting piece abuts against the cushion material of the seat back from the inside, thus keeping the cushion material in its protruding shape, so that the rear floor carpet is kept from sinking in.
In US 6 634 710 B1 which shows the features of the subject-matter of the preamble of claim 1, a vehicle seat assembly includes a seat frame for supporting a cushion of a seat. A bracket is attached to the seat frame. The bracket includes mounting locations for fastening the bracket to a floor portion of a vehicle. At least one pair of anchor wires are attached to the bracket. Each of the anchor wires includes first and second legs which are attached to the bracket, and a latch receiving portion interconnecting the first and second legs. The latch receiving portion is adapted to be releasably engageable with a corresponding latch mechanism on a child safety seat.

### RELATED ART DOCUMENTS

### PATENT DOCUMENTS

[Patent Document 1] Japanese Patent Laid-open Publication No. 2004-268668
[Patent Document 2] Japanese Patent Laid-open Publication No.2009-280146

### SUMMARY OF THE INVENTION

### PROBLEMS TO BE SOLVED BY THE INVENTION

The seat fixing member of Patent Document 2 has substantially the same function as the fixing member of Patent Document 1, but it has a more versatile and simple configuration with regard to the aspect that a hook for fixing the rear seat is integrated with it. However, with Patent Document 2, in order to prevent the rear floor carpet from sinking in, an abutting piece or the like provided as a separate member from the seat fixing member has to provided on the inside of the seat back, and with regard to this aspect, there is still room for making it even simpler.

Moreover, with the vehicle structure of Patent Document 2, the rear floor carpet is connected to the seat back. Therefore, it is conceivable that differing droops occur in the rear floor carpet depending on whether the seat back is erect or reclined. There is also concern that the rear floor carpet may be wedged between the seat back and the seat cushion, depending on the amount of droop.

In view of the above-noted problems, it is an object of the present invention to provide a vehicle rear structure with a simple configuration, to which a child seat can be attached, and with which sinking in of the rear floor carpet can be prevented.

### MEANS FOR SOLVING THE PROBLEM

In order to solve the above-noted problem, a representative configuration of a vehicle rear structure according to the present invention includes a child seat attachment member installed on a floor panel near a back side of a rear seat, and a carpet covering the child seat attachment member, the child seat attachment member including a panel-shaped base portion bento to be fixed to a step portion of the floor panel; a plurality of child seat anchors that are attached to the base portion and have a predetermined shape to be coupled respectively to at least two child seat engagement members for fixing a child seat, the child seat engagement members extending from the child seat on the rear seat towards the rear direction of the vehicle; wherein the base portion includes a plurality of first raised portions that are respectively formed at positions corresponding to the child seat anchors and have a predetermined first height, the first raised portions raising the height of the child seat anchors to be corresponding to the height of the child seat engagement members; and a second raised portion that is formed between the first raised portions and has a predetermined second height for raising the height of the carpet to substantially the same height as the height of the carpet on the child seat anchors.

With this child seat attachment member, first of all, the first raised portions raise the position of the child seat anchors to the suitable height where they can be reached by the child seat engagement members. Furthermore, a second raised portion is provided between the first raised portions, ensuring that the carpet does not sink in. Thus, even if the carpet (rear floor carpet) is not connected to the seat back of the rear seat, it can be placed such that it extends to the immediate vicinity of the seat back without sinking in. Consequently, it can be prevented that items are dropped under the seat, and moreover, the unevenness of the rear floor carpet is reduced, so that the quality of its appearance is improved.

In the above-described vehicle rear structure, a rear edge of the second raised portion may be positioned further to the rear than a rear edge of the first raised portions, and the second raised portion may rise with a smooth inclination towards the front.

With this configuration, when placing the rear floor carpet from the rear of the vehicle to the front, the rear floor carpet is lifted by the second raised portion before the first raised portion, so that there is no risk of the rear floor carpet getting caught at the child seat anchors on the first raised portions. Accordingly, the rear floor carpet can be placed more smoothly.

The above-described vehicle rear structure may further include a pedestal portion formed in the floor panel below the second raised portion of the child seat attachment member, the pedestal portion rising over a region that is wider than the second raised portion at least with respect to the width direction and the longitudinal direction of the vehicle. By utilizing the height of the pedestal portion, there is no need to let the above-noted second raised portion rise abruptly.

### EFFECT OF THE INVENTION

With the present invention, it is possible to provide a vehicle rear structure with a simple configuration, to which a child seat can be attached, and with which the sinking in of the rear floor carpet can be prevented.

### BRIEF DESCRIPTION OF THE DRAWINGS

- FIG. 1: shows diagrams illustrating a vehicle rear structure according to one embodiment of the invention.
- FIG. 2: shows diagrams illustrating the child seat attachment member in FIG. 1(b).
- FIG. 3: shows cross-sectional views of FIG. 1(b).
- FIG. 4: shows cross-sectional views of FIG. 1(b).
- FIG. 5: shows diagrams illustrating a vehicle rear structure according to a conventional example for comparison with the embodiment of the invention.

### EMBODIMENTS OF THE INVENTION

Referring to the accompanying drawings, the following is a detailed explanation of preferable embodiments of the present invention. All dimensions, materials and further specific numbers shown in the embodiments are given only by way of example, in order to aid the understanding of the invention, but are not meant to limit the present invention, unless this is explicitly stated so. It should be further noted that throughout this specification and in the drawings, elements that have substantially the same functionality and/or structure are denoted by the same reference numerals, and their duplicate explanation has been omitted. Furthermore, elements that are not directly related to the present invention may not necessarily be shown in the figures.

### Vehicle Rear Structure

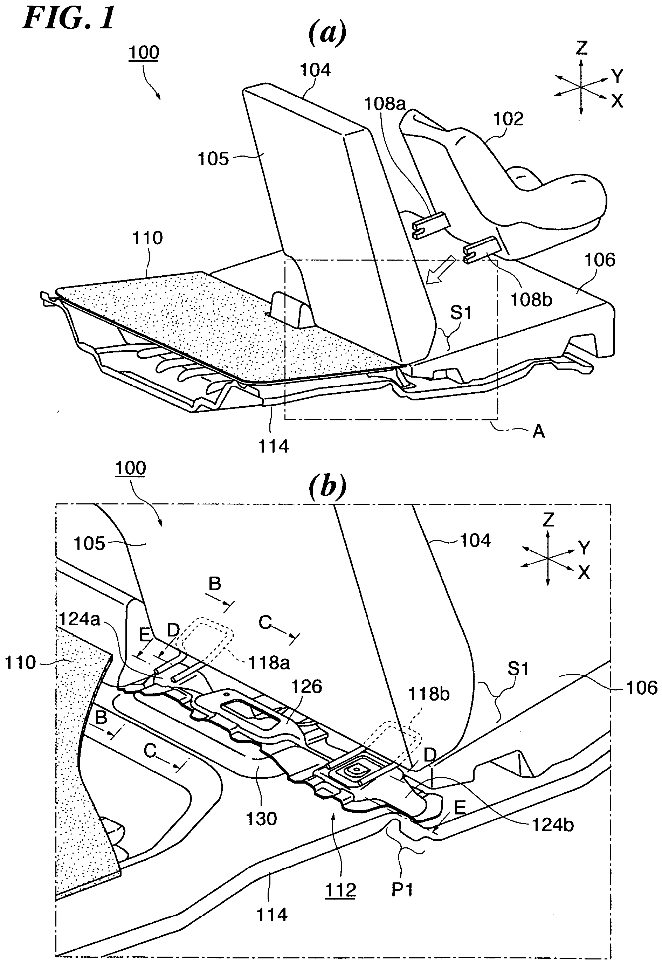

FIG. 1 shows diagrams illustrating a vehicle rear structure 100 of a vehicle rear portion according to the present embodiment. FIG. 1(a) is a perspective view showing the vehicle rear structure 100 as seen from behind the right side of the vehicle. It should be noted that in the drawings, including FIG. 1, the X-axis marks the lateral direction of the vehicle, the Y-axis marks the longitudinal direction of the vehicle, and the Z-axis marks the vertical direction.

As shown in FIG. 1(a), it is possible to attach a child seat 102 to the vehicle rear structure 100. The child seat 102 is attached onto a seat cushion 106 of a rear seat 104. In accordance with the ISO-FIX standard, the child seat 102 can be attached with two child seat engagement members 108a and 108b that are provided on its rear side.

The child seat engagement members 108a and 108b are connectors that extend from the child seat 102 on the rear seat 104 towards the rear of the vehicle. When fixing the child seat 102, the child seat engagement members 108a and 108b are inserted into a gap S1 between a seat back 105 and the seat cushion 106, and the child seat engagement members 108a and 108b are coupled to a child seat attachment member 112 (see FIG. 1(b)).

FIG. 1(b) is a partially enlarged view of the region A in FIG. 1(a). In FIG. 1(b), a portion of a rear floor carpet 110 is removed to show the structure below it. As shown in FIG. 1(b), the rear floor carpet 110 is arranged to cover the child seat attachment member 112.

The child seat attachment member 112 is installed on a rear floor panel 114 near the back side of the rear seat 104, and is coupled to the child seat 102 (see FIG. 1(a)), thereby fixing it. In particular, the child seat attachment member 112 of the present embodiment can be installed up to the vicinity of the back side of the rear seat 104, without causing the rear floor carpet 110 to sink in.

### Child Seat Attachment Member

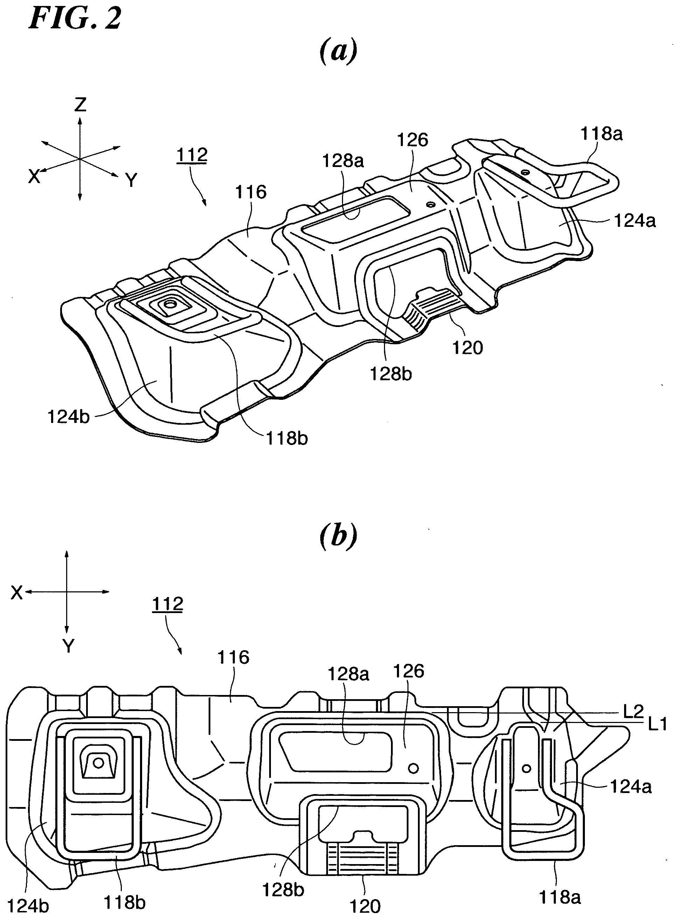

FIG. 2 shows diagrams illustrating the child seat attachment member 112 in FIG. 1(b). FIG. 2(a) is a perspective view showing the child seat attachment member 112 of FIG. 1(b) as seen from in front of the right side of the vehicle.

As shown in FIG. 2(a), a base portion 116 is formed by bending a single panel (metal plate). As the "bending process", press-forming is typically used, but it is possible to use any forming method which applies an external form on a metal sheet to deform the metal sheet. The base portion 116 is bent into a shape that follows the shape of a step portion P1 in the rear floor panel 114 shown in FIG. 1(b), and is fixed to the step portion P1 so that it does not rattle. The base portion 116 may be fixed to the rear floor panel 114 by welding or by being screwed on with bolts or the like.

Child seat anchors 118a and 118b are portions that are respectively coupled to the child seat engagement members 108a and 108b (see FIG. 1(a)). The two child seat anchors 118a and 118b are provided with predetermined shape, in accordance with the ISO-FIX standard. More specifically, they are formed by bending a metal bar, providing it with a horizontal portion, and arranging this horizontal portion to protrude towards the front of the vehicle. The child seat anchor 118a is welded to the upper portion of a first raised portion 124a, and the child seat anchor 118b is welded to the upper portion of a first raised portion 124b.

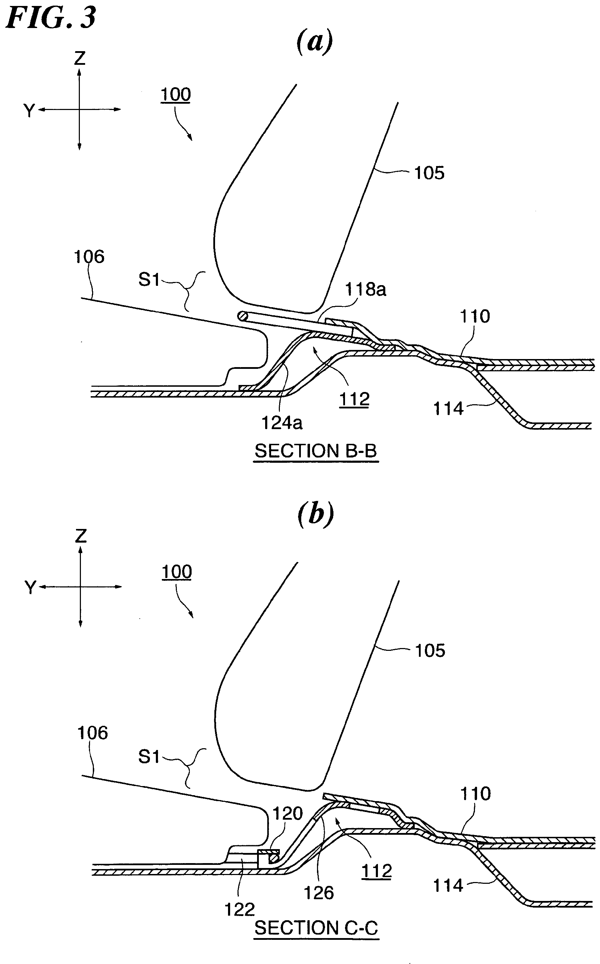

Moreover, the child seat attachment member 112 is provided also with a rear seat anchor 120 for coupling to the rear seat 104. A rear seat coupling member 122 is provided at the seat cushion 106 of the rear seat 104 (see FIG. 3(b)). The rear seat coupling member 122 can be coupled to the rear seat anchor 120, and the rear seat 104 can be attached to (positioned with respect to) the rear seat anchor 120.

The first raised portions 124a and 124b are portions serving as a foundation of the child seat anchors 118a and 118b. Through the bending process, the first raised portions 124a and 124b are provided with a shape that is raised from the base portion 116 around them. The first raised portions 124a and 124b are raised to such a height that the position of the child seat anchors 118a and 118b on the base portion 116 corresponds to that of the child seat engagement members 108a and 108b (see FIG. 1(a)).

A second raised portion 126 is formed in the region of the base portion 116 between the first raised portions 124a and 124b. Also the second raised portion 126 is provided with a shape that is raised from the base portion 116 around it through the bending process. The second raised portion 126 has the function of ensuring that the rear floor carpet 110 placed on the child seat attachment member 112 is substantially as high as the that on the child seat anchors 118a and 118b. Lightening holes 128a and 128b are provided in the second raised portion 126, and the corresponding panel region is removed.

The following is a more specific explanation of the function of the second raised portion 126. FIG. 3 shows cross-sectional views of FIG. 1(b). FIG. 3 (a) is a cross-sectional view through the line B-B in FIG. 1(b) and shows mainly the first raised portion 124a. As shown in FIG. 3(a), the child seat engagement member 108a is coupled to the child seat anchor 118a (see FIG. 1(a)) such that they mesh with each other. The first raised portion 124a has the function of arranging the child seat anchor 118a at a position where it can be reached by the child seat engagement member 108a (insertion position). For this reason, the height of the first raised portion 124a is set to a height that corresponds to the position of the gap S1 between the seat cushion 106 and the seat back 105 through which the child seat engagement member 108a is inserted.

We now refer again to FIG. 1(b). Even though the child seat 102 can be suitably attached by providing the previously mentioned first raised portions 124a and 124b, if only the first raised portions 124a and 124b are provided, the rear floor carpet 110 will sink in in the region between them. As a countermeasure, the second raised portion 126 is provided.

FIG. 3(b) is a cross-sectional view along the line C-C in FIG. 1(b), showing mainly the second raised portion 126. As shown in FIG. 3(b), by providing the second raised portion 126, it is possible to place the rear floor carpet 110 up to the vicinity of the seat back 105 of the rear seat 104, without sinking in.

Measures are taken, such that the rear floor carpet 110 can be placed smoothly on the second raised portion 126. FIG. 2(b) is a diagram showing the child seat attachment member 112 of FIG. 2 (a) as viewed from above. As shown in FIG. 2(b), the second raised portion 126 is formed such that it extends further to the rear than the first raised portions 124a and 124b. More specifically, the rear edge L2 of the second raised portion 126 is positioned further to the rear than the rear edge L1 of the first raised portion 124a. With this configuration, when placing the rear floor carpet 110 from the rear, the rear floor carpet 110 is lifted by the second raised portion 126 before it reaches the child seat anchor 118a on the first raised portion 124a shown in FIG. 3(a).

Furthermore, as shown in FIG. 3(b), the second raised portion 126 rises with a smooth inclination of forty five (45) degrees or less, more preferably of thirty (30) degrees or less towards the front. Thus, by guiding the rear floor carpet 110 to the second raised portion 126, it is possible to place the rear floor carpet 110 without it getting caught by the child seat anchor 118 (FIG. 3(a)). Consequently, the placement operation is simplified, and it is possible to save man-hours.

It should be noted that the rear floor carpet 110 can be fixed by clips or the like to the child seat attachment member 112. In this case, no holes leading to the outside of the vehicle need to be provided, so that there is the advantage over the case where the rear floor carpet 110 is fixed directly to the rear floor panel 114 that the seeping in of water or moisture can be prevented.

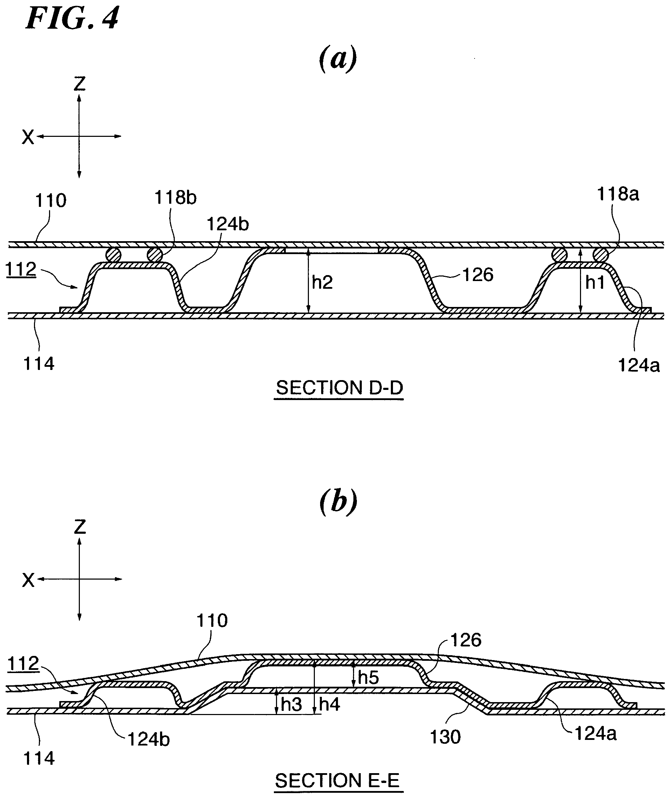

FIG. 4 shows cross-sectional views of FIG. 1(b). FIG. 4(a) is a cross-sectional view along the line D-D in FIG. 1(b). As shown in FIG. 4(a), the height h2 of the second raised portion 126 is set to be substantially the same as the height of the h1 to the top of the child seat anchor 118 of the first raised portion. With this configuration, the unevenness of the rear floor carpet 110 is reduced so that its appearance is improved.

Moreover, as shown in FIG. 1(b), a pedestal portion 130 is provided in the rear floor panel 114 below the second raised portion 126. The pedestal portion 130 is a portion that is raised from the rear floor panel 114 around it, and is formed in a region that is wider than the second raised portion 126 at least with respect to the width direction and the longitudinal direction of the vehicle. FIG. 4(b) is a cross-sectional view along the line E-E in FIG. 1(b). As shown in FIG. 4(b), the height h3 of the pedestal portion 130 can be utilized for the second raised portion 126, so that it is not necessary that the second raised portion 126 rises (is bent) abruptly. For example, if there were no pedestal portion 130, then the second raised portion 126 would have to be raised from the base portion 116 on the rear floor panel 114 to the height h4. However, in the present embodiment, the base portion 116 is already at a higher position due to the pedestal portion 130, so that the second raised portion can be formed with a curve that is smaller in accordance with the height h5 from the base portion 116 on the pedestal portion 130.

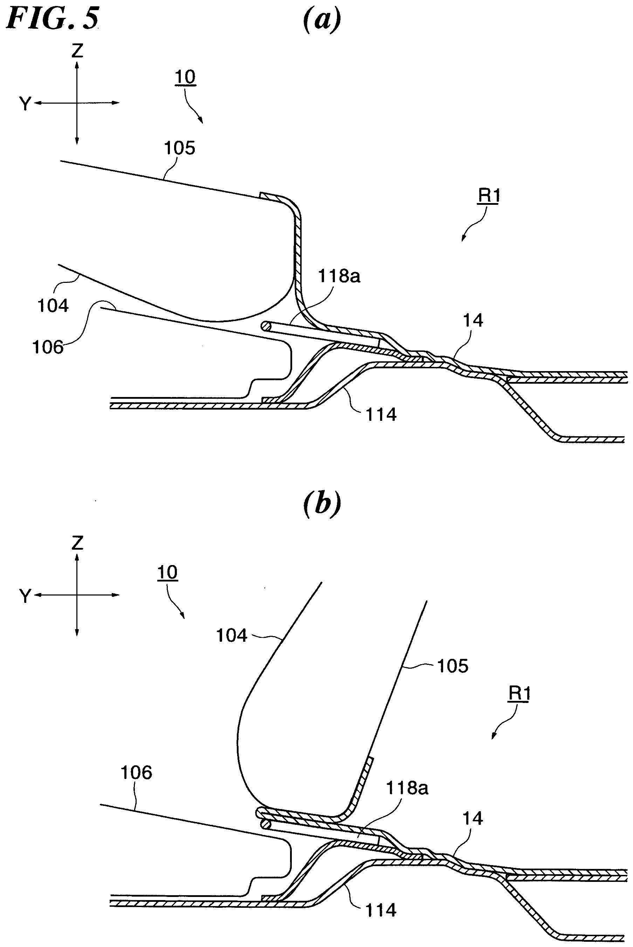

As shown in FIGS. 3(a) and 3(b), with this vehicle rear structure 100, the rear floor carpet 110 is not connected to the seat back 105 of the rear seat 104. FIG. 5 shows diagrams illustrating a vehicle rear structure 10 according to a conventional example for comparison with the present embodiment. FIG. 5(a) is a diagram in which the seat back 105 is reclined, and FIG. 5(b) is a diagram in which the seat back 105 in FIG. 5(a) is upright. As shown in FIG. 5(a), in the conventional vehicle rear structure 10, the rear floor carpet 14 is connected to the seat back 105. With this structure, small items in the trunk room R1 cannot fall between the seat back 105 and the rear floor panel 114.

However, if the seat back 105 is put upright from the state in FIG. 5(a) to the state shown in FIG. 5(b), then the rear floor carpet 14 will sag or become flabby, and there is the risk that the rear floor carpet 14 is tucked in between the seat back 105 and the seat cushion 106. When this situation occurs, then there is the risk that the rear floor carpet 14 interferes with the child seat anchor 118a, and the child seat engagement member 108a (see FIG. 1(a)) cannot be coupled.

On the other hand, as shown in FIG. 3(a), the rear floor carpet 110 is not connected to the seat back 105 in the present embodiment. Therefore, even when the seat back 105 is reclined or erected from the state in FIG. 3(a), for example, the rear floor carpet 110 will not be tucked in between the seat back 105 and the seat cushion 106. Moreover, since sinking of the rear floor carpet 110 is prevented by the child seat attachment member 112 as explained above, the rear floor carpet 110 can be placed extending stably all the way to the seat back 105. Thus, there is no risk that small items fall between the seat back 105 and the rear floor panel 114. Moreover, the rear floor carpet 110 is smaller than the rear floor carpet 14 in FIG. 5(b), so that also the costs can be reduced.

Moreover, the child seat attachment member 112 has an increased bending stiffness, since its second moment of area is increased by providing it with the second raised portion 126. Consequently, it is possible to support the child seat 102 more firmly.

In the foregoing, preferable embodiments of the present invention were explained with reference to the accompanying drawings, but needless to say, the present invention is not limited to these examples. The person skilled in the art will appreciate that various modifications and variations can be arrived at within the scope of the appended patent claims, and those modifications and variations should be understood to be included within the technical scope of the present invention.

### INDUSTRIAL APPLICABILITY

The present invention can be utilized in a vehicle rear structure that includes a child seat attachment member installed on a floor panel near the back side of a rear seat, and a carpet that is covering that child seat attachment member.

### INDEX TO THE REFERENCE NUMERALS

S1 ... gap; P1 ... step portion; L1, L2 ... rear edge; R1 ... trunk room; 10, 100 ... vehicle rear structure; 102 ... child seat; 104 ... rear seat; 105 ... seat back; 106 ... seat cushion; 108a, 108b ... child seat engagement members; 110 ... rear floor carpet; 112 ... child seat attachment member; 114 ... rear floor panel; 116 ... base portion; 118a, 118b ... child seat anchors; 120 ... rear seat anchor; 122 ... rear seat coupling member; 124a, 124b ... first raised portion; 126 ... second raised portion; 128a, 128b ... lightening holes; 130 ... pedestal portion.

## Claims

1. A vehicle rear structure comprising a child seat attachment member installed on a floor panel near a back side of a rear seat, and a carpet covering the child seat attachment member, the child seat attachment member comprising:
a panel-shaped base portion (116) bent to be fixed to a step portion of the floor panel;
a plurality of child seat anchors (118a, 118b) that are attached to the base portion and have a predetermined shape to be coupled respectively to at least two child seat engagement members for fixing a child seat, the child seat engagement members extending from the child seat on the rear seat towards the rear direction of the vehicle;
wherein the base portion comprises:
a plurality of first raised portions (124a, 124b) that are respectively formed at positions corresponding to the child seat anchors and have a predetermined first height, the first raised portions raising the height of the child seat anchors to be corresponding to the height of the child seat engagement members; and
a second raised portion (126) that is formed between the first raised portions **characterized in that** the second raised portion has a predetermined second height for raising the height of the carpet to substantially the same height as the height of the carpet on the child seat anchors.

2. The vehicle rear structure according to claim 1,
wherein a rear edge (L2) of the second raised portion is positioned further to the rear than a rear edge (L1) of the first raised portions; and
the second raised portion rises with a smooth inclination towards the front.

3. The vehicle rear structure according to claim 1 or 2, further comprising a pedestal portion (130) formed in the floor panel below the second raised portion of the child seat attachment member, the pedestal portion rising over a region that is wider than the second raised portion at least with respect to the width direction and the longitudinal direction of the vehicle.

## Patentansprüche

1. Fahrzeugheckstruktur, umfassend ein Kindersitzbefestigungselement, welches an einer Bodenplatte in der Nähe einer Rückseite eines Rücksitzes installiert ist, und einen Teppich, welcher das Kindersitzbefestigungselement überdeckt, wobei das Kindersitzbefestigungselement umfasst:
einen plattenförmigen Basisabschnitt (116), welcher gebogen ist, um an einem Stufenabschnitt der Bodenplatte fixiert zu werden;
eine Vielzahl an Kindersitzankern (118a, 118b), welche an dem Basisabschnitt befestigt sind und eine vorbestimmte Form aufweisen, um entsprechend mit mindestens zwei Kindersitzeingriffselementen zum Befestigen eines Kindersitzes verbunden zu werden, wobei die Kindersitzeingriffselemente sich von dem Kindersitz zu dem Rücksitz in die Fahrzeugheckrichtung erstrecken;
wobei der Basisabschnitt umfasst:
eine Vielzahl an ersten erhabenen Abschnitten (124a, 124b), welche jeweils an mit den Kindersitzankern übereinstimmenden Positionen ausgebildet sind und eine vorbestimmte erste Höhe aufweisen, wobei die ersten erhabenen Abschnitte die Höhe der Kindersitzanker anheben, um mit der Höhe der Kindersitzeingriffselemente übereinzustimmen; und
einen zweiten erhabenen Abschnitt (126), welcher zwischen den ersten erhabenen Abschnitten ausgebildet ist,
**dadurch gekennzeichnet,**
**dass** der zweite erhabene Abschnitt eine vorbestimmte zweite Höhe aufweist, um die Höhe des Teppichs im Wesentlichen auf dieselbe Höhe wie die Höhe des Teppichs an den Kindersitzankern anzuheben.

2. Fahrzeugheckstruktur nach Anspruch 1, wobei eine hintere Kante (L2) des zweiten erhabenen Abschnitts weiter hinten angeordnet ist als eine hintere Kante (L1) der ersten erhabenen Abschnitte; und
der zweite erhabene Abschnitt mit einer flachen Steigung in Richtung der Front ansteigt.

3. Fahrzeugheckstruktur nach Anspruch 1 oder 2, ferner aufweisend
einen Sockelabschnitt (130), welcher in der Bodenplatte unterhalb des zweiten erhabenen Abschnitts des Kindersitzbefestigungselements ausgebildet ist, wobei der Sockelabschnitt über einen Bereich ansteigt, welcher zumindest in Bezug auf die Breitenrichtung und die Längsrichtung des Fahrzeugs breiter als der zweite erhabene Abschnitt ist.

## Revendications

1. Structure arrière de véhicule comprenant un élément de fixation de siège enfant, installé sur un panneau de plancher près d'un côté dossier de siège arrière, et un tapis recouvrant l'élément de fixation de siège enfant, l'élément de fixation de siège enfant comprenant :
une partie base en forme de panneau (116) pliée pour être fixée à une partie formant décrochement du panneau de plancher ;
une pluralité d'ancrages de siège enfant (118a, 118b) qui sont attachés à la partie base et présentent une forme prédéterminée pour être accouplés respectivement à au moins deux éléments de mise en prise de siège enfant destinés à fixer un siège enfant, les éléments de mise en prise de siège enfant s'étendant depuis le siège enfant sur le siège arrière, en direction de l'arrière du véhicule ;
dans laquelle la partie base comprend :
une pluralité de premières parties surélevées (124a, 124b) qui sont respectivement formées à des positions correspondant aux ancrages de siège enfant et qui présentent une première hauteur prédéterminée, les premières parties surélevées surélevant la hauteur des ancrages de siège enfant pour les faire correspondre à la hauteur des éléments de mise en prise de siège enfant ; et
une seconde partie surélevée (126) qui est formée entre les premières parties surélevées, **caractérisée en ce que** la seconde partie surélevée présente une seconde hauteur prédéterminée, destinée à surélever la hauteur du tapis sensiblement à la même hauteur que la hauteur du tapis sur les ancrages de siège enfant.

2. Structure arrière de véhicule selon la revendication 1,
dans laquelle un bord arrière (L2) de la seconde partie surélevée est positionné plus à l'arrière qu'un bord arrière (L1) des premières parties surélevées ; et
la seconde partie surélevée s'élève avec une inclinaison douce vers l'avant.

3. Structure arrière de véhicule selon la revendication 1 ou 2, comprenant en outre une partie socle (130) formée sur le panneau de plancher, au-dessous de la seconde partie surélevée de l'élément de fixation de siège enfant, la partie socle s'élevant sur une région qui est plus large que la seconde partie surélevée, au moins par rapport à la direction de la largeur et à la direction de la longueur du véhicule.
